# EUROPEAN PATENT APPLICATION

(11) **EP 1 777 013 A2**
(43) Date of publication of application: **25.04.2007**
(21) Application number: 06021097.8
(22) Date of filing: 06.10.2006
(51) Int. Cl.: B03C 7/10

(54) **Charging and sorting device**

(30) Priority: 19.10.2005 JP 2005303960
(71) Applicant: MITSUBISHI ELECTRIC CORPORATION, Chiyoda-ku Tokyo 100-8310 (JP)
(72) Inventor: Endo, Yasuhiro, Chiyoda-ku Tokyo 100-8310 (JP); Mukuda, Muneaki, Chiyoda-ku Tokyo 100-8310 (JP); Matsuo, Yuichi, Chiyoda-ku Tokyo 100-8310 (JP)
(74) Representative: Sajda, Wolf E.

(57) **Abstract**

A mixture of material chips (A) and material chips (B) is charged by a frictional charging device (2a) made of a material property (A), and then first and second sorted matters (7a, 6a) are sorted from the mixture by an electric field across opposed electrodes (41a and 42a). After that, the second sorted matter (6a) of higher content by percentage of the material chips (B) than the content by percentage of the material chips (A) is charged by a frictional charging device (2b) made of a material property (B), and then third and fourth sorted matters (7b, 6b) are sorted from the second sorted matter (6a) by an electric field across opposed electrodes (41b and 42b). By subjecting the mixture including the material chips (A and B) to two-stage sorting, and selecting the materials of portions having charging capability of first and second charging devices to conform to the electrostatic properties of the materials of the mixture, the charging of the material chips (A and B) in the first and second charging devices is accelerated, making it easy to obtain sorted matters where the first and second materials have been purified to a high degree. A charging and sorting device is therefore achieved which is capable of sorting the materials of the mixture to a higher degree.

## Description

### BACKGROUND OF THE INVENTION

### Field of the Invention

The present invention relates to charging and sorting devices for charging a mixture having electrostatic properties such as plastic, either frictionally or otherwise, and sorting materials of the mixture by type in an electrostatic field by utilizing differences in electrostatic properties among the materials of the mixture.

### Description of the Background Art

There are widely known charging and sorting devices for frictionally charging a mixture that includes different types of materials in a frictional electrification rank (a rank where, when different types of materials are rubbed, ones that tend to become positively charged are ranked high, and ones that tend to become negatively charged are ranked low), and sorting the materials that have become positively or negatively charged in an electrostatic field.

For example, the frictional electrification rank of plastic is such that ABS (polymer of acrylonitrile, butadiene, and styrene), PS (polystyrene), PE (polyethylene), PP (polypropylene), PET (polyethylene terephthalate), and PVC (polyvinyl chloride) are ranked in this order from a positive side to a negative side. The sorting based on this frictional electrification rank allows the recycling and so forth of waste plastics.

A conventional technique for sorting a mixture that includes three or more types of materials is disclosed in Japanese Patent Application Laid-Open No. 2002-136894. According to this technique, as mentioned in its paragraph [0012], a plurality of pairs are arranged in series, each of the pairs including a material-supplying device (supply hopper and supply device), a frictional charging device, a charging and sorting device, and a recovery vessel.

In addition, the inner wall (which serves as a charge-supplying material) of the frictional charging device in a first stage is made of the same material as one of the materials of the mixture, that is placed at the positive or negative end of the frictional electrification rank. The inner walls (charge-supplying materials) of the frictional charging devices in a second stage and the stages that follow are made of the same materials as those among the materials of the mixture, respectively, in such a manner that the materials move toward the other end of the frictional electrification rank when viewed from the first stage.

The result thus obtained is a multistage charging and sorting device capable of sorting the same type of material as a friction-applying material in each stage.

The above technique disclosed in Japanese Patent Application Laid-Open No. 2002-136894 is under the assumption that a material is sorted perfectly in each stage, and that the material having been sorted in the previous stage is not mixed in the next stage and the stages that follow. It is difficult, however, to sort a material perfectly in each stage.

### SUMMARY OF THE INVENTION

An object of the present invention is to achieve a charging and sorting device capable of sorting materials of a mixture to a higher degree.

According to a first aspect of the present invention, a charging and sorting device sorts a first material and a second material placed in different positions in a frictional electrification rank from a mixture including the first and second materials, and includes a first charging device, a first electrostatic sorting device, a second charging device, and a second electrostatic sorting device. The first charging device charges the mixture, and at least a portion having charging capability of the first charging device is made of the first material. The first electrostatic sorting device has a first electrode and a second electrode, and generates a first electric field across the first and second electrodes to make the mixture having been charged pass through the first electric field, thereby sorting a first sorted matter and a second sorted matter from the mixture. The first sorted matter is of higher content by percentage of the first material than the content by percentage of the first material in the mixture, and the second sorted matter is of higher content by percentage of the second material than the content by percentage of the second material in the mixture. The second charging device charges the second sorted matter, and at least a portion having charging capability of the second charging device is made of the second material. The second electrostatic sorting device has a third electrode and a fourth electrode, and generates a second electric field across the third and fourth electrodes to make the second sorted matter having been charged pass through the second electric field, thereby sorting a third sorted matter and a fourth sorted matter from the second sorted matter. The third sorted matter includes the first and second materials, and the fourth sorted matter is of higher content by percentage of the second material than the content by percentage of the second material in the second sorted matter.

The first and second sorted matters are sorted from the mixture by the first electrostatic sorting device, and then the third and fourth sorted matters are sorted from the second sorted matter by the second electrostatic sorting device. By subjecting the mixture including the first and second materials to two-stage sorting, and selecting the materials of the portions having charging capability of the first and second charging devices to conform to the electrostatic properties of the materials of the mixture, the charging of the first and second materials in the first and second charging devices is accelerated, making it easy to obtain sorted matters where the first and second materials have been purified to a high degree. A charging and sorting device is therefore achieved which is capable of sorting the materials of the mixture to a higher degree.

According to a second aspect of the present invention, a charging and sorting method includes the following steps (a) to (d). In step (a), a mixture mainly including a first material and a second material placed in different positions in a frictional electrification rank is frictionally charged by a first frictional charging section made of the same material property as the first material. In step (b), the mixture having been frictionally charged is made to pass through a first electric field, thereby sorting a first sorted matter and a second sorted matter from the mixture, the first sorted matter being of higher content by percentage of the first material than the content by percentage of the first material in the mixture, and the second sorted matter being of higher content by percentage of the second material than the content by percentage of the second material in the mixture. In step (c), the second sorted matter is frictionally charged by a second frictional charging section made of the same material property as the second material. In step (d), the second sorted matter having been frictionally charged is made to pass through a second electric field, thereby sorting a third sorted matter and a fourth sorted matter the second sorted matter, the third sorted matter including the first and second materials, and the fourth sorted matter being of higher content by percentage of the second material than the content by percentage of the second material in the second sorted matter.

The first and second sorted matters are sorted from the mixture in step (b), and then the third and fourth sorted matters are sorted from the second sorted matter in step (d). By subjecting the mixture including the first and second materials to two-stage sorting, and selecting the first and second frictional charging sections to conform to the electrostatic properties of the materials of the mixture, the charging of the first and second materials in steps (a) and (c) is accelerated, making it easy to obtain sorted matters where the first and second materials have been purified to a high degree. The materials of the mixture can therefore be sorted to a higher degree.

These and other matters, features, aspects and advantages of the present invention will become more apparent from the following detailed description of the present invention when taken in conjunction with the accompanying drawings.

### BRIEF DESCRIPTION OF THE DRAWINGS

- Fig. 1: illustrates a charging and sorting device according to a first preferred embodiment;
- Fig. 2: is a cross-sectional view illustrating a frictional charging device of the charging and sorting device according to the first preferred embodiment;
- Fig. 3: illustrates a charging and sorting device according to a second preferred embodiment;
- Fig. 4: is a cross-sectional view illustrating a frictional charging device of the charging and sorting device according to the second preferred embodiment;
- Fig. 5: illustrates a charging and sorting device according to a third preferred embodiment; and
- Fig. 6: illustrates a charging and sorting device according to a fourth preferred embodiment.

### DESCRIPTION OF THE PREFERRED EMBODIMENTS

### First Preferred Embodiment

A first preferred embodiment is directed to a charging and sorting device for sorting first and second materials from a mixture including the first and second materials, by subjecting the mixture to two-stage sorting.

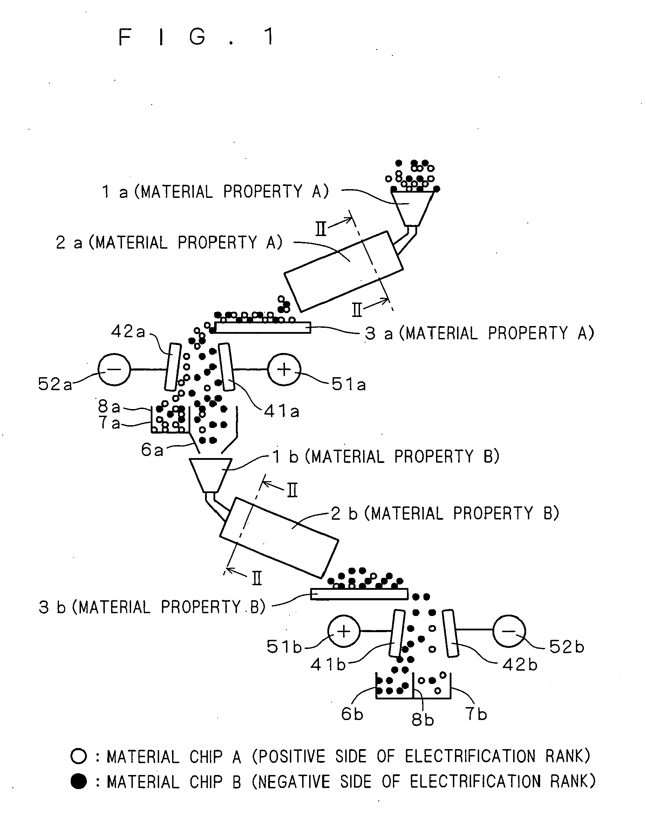

Fig. 1 illustrates the charging and sorting device according to the first preferred embodiment. As shown, this charging and sorting device includes a material-supplying device 1a in a first stage, a frictional charging device 2a in the first stage, an electric-field-introducing device 3a in the first stage, opposed electrodes 41a and 42a as platelike electrodes in the first stage, power sources 51a and 52a in the first stage, a recovery box 8a in the first stage, a material-supplying device 1b in a second stage, a frictional charging device 2b in the second stage, an electric-field-introducing device 3b in the second stage, opposed electrodes 41b and 42b as platelike electrodes in the second stage, power sources 51b and 52b in the second stage, and a recovery box 8b in the second stage.

A mixture including a first material (material chips A) and a second material (material chips B) is fed into the material-supplying device 1a in the first stage. In Fig. 1, the sign o indicates material chips A, and the sign • indicates material chips B, respectively. The materials chips A and B are placed in different positions in the frictional electrification rank, with the material chip A being placed on a positive side of the rank, and the material chip B on a negative side. At least a contact surface with the mixture of the material-supplying device 1a is made of the first material (same material property as the material chip A).

The frictional charging device 2a in the first stage is supplied with the mixture from the material-supplying device 1a. At least a portion having charging capability (contact surface with the mixture, namely, the inner wall) of the frictional charging device 2a is made of the first material (same material property as the material chip A). The frictional charging device 2a serves as a first charging device for charging the mixture.

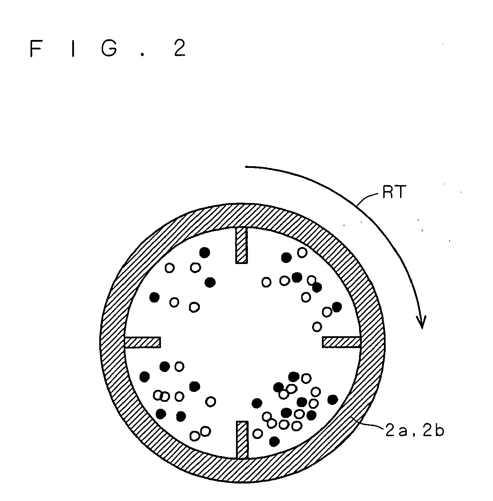

The frictional charging device 2a is a rotatable cylindrical stirring vessel. Fig. 2 illustrates a cross-sectional structure of the frictional charging device 2a, taken along the section lines II-II in Fig. 1. As shown in Fig. 2, the frictional charging device 2a is rotatable in a direction RT of rotation of the axis of the stirring vessel, and rubs the mixture including the material chips A and B while stirring the mixture by rotation, to thereby charge the mixture.

In the frictional charging device 2a in the first stage, where at least the portion having charging capability is made of the first material (same material property as the material chip A), the first material (material chips A) in the mixture tends to become positively charged and the second material (material chips B) in the mixture tends to become negatively charged. The material chips B become charged by being rubbed not only against the material chips A, but against the inner wall of the frictional charging device 2a as well. Thus, the material chips B tend to become further negatively charged.

The electric-field-introducing device 3a in the first stage is supplied with the charged mixture from the frictional charging device 2a. At least a contact surface with the mixture of the electric-field-introducing device 3a is again made of the first material (same material property as the material chip A). The electric-field-introducing device 3 a has the function of sending the mixture toward the opposed electrodes 41a and 42a.

The opposed electrode (positive electrode) 41a in the first stage is applied with a high potential by the power source 51a in the first stage, and the opposed electrode (negative electrode) 42a in the first stage is applied with a low potential by the power source 52a in the first stage. An electric field is thus generated across the opposed electrodes 41a and 42a. The charged mixture passes through this electric field. The positively charged first material (material chips A) in the charged mixture is attracted to the opposed electrode 42a on the low-potential side, while the negatively charged second material (material chips B) in the charged mixture is attracted to the opposed electrode 41a on the high-potential side.

Consequently, a first sorted matter of higher content by percentage of the first material (material chips A) than the content by percentage of the first material (material chips A) in the mixture, and a second sorted matter of higher content by percentage of the second material (material chips B) than the content by percentage of the second material (material chips B) in the mixture are sorted from the mixture. That is, the first material (material chips A) is purified to a high degree in the first sorted matter, and the second material (material chips B) is purified to a high degree in the second sorted matter. The opposed electrodes 41a and 42a and the power sources 51a and 52a form a first electrostatic sorting device.

The sufficiently charged material chips B are attracted to the positive electrode 41a side upon passing through the electric field generated across the opposed electrodes 41a and 42b, to be sorted as the second sorted matter. However, a small amount of the material chips A may be present in the second sorted matter having been sorted by the first electrostatic sorting device. This is because the material chips A, which are supposed to become positively charged, may include negatively charged material chips by being rubbed against the portion having charging capability (contact surface with the mixture) of the frictional charging device 2a. The first sorted matter is recovered by a part 7a of the recovery box 8a, and the second sorted matter by a part 6a of the recovery box 8a.

The second sorted matter of higher content by percentage of the second material (material chips B) than the content by percentage of the first material (material chips A) is fed into the material-supplying device 1b in the second stage from the part 6a of the recovery box 8a. At least a contact surface with the second sorted matter of the material-supplying device 1b is made of the second material (material chips B).

The frictional charging device 2b in the second stage is supplied with the second sorted matter from the material-supplying device 1b. At least a portion having charging capability (contact surface with the second sorted matter, namely, the inner wall) of the frictional charging device 2b is made of the second material (same material property as the material chip B). The frictional charging device 2b serves as a second charging device for charging the second sorted matter.

The frictional charging device 2b is a rotatable cylindrical stirring vessel as shown in Fig. 2, like the frictional charging device 2a. In the frictional charging device 2b in the second stage, where at least the portion having charging capability is made of the second material (same material property as the material chip B), the first material (material chips A) having been positively charged in the first stage in the second sorted matter tends to become further positively charged. This because the material chips A, which become charged by being rubbed not only against the material chips B, but against the inner wall of the frictional charging device 2b as well, tend to become further positively charged. On the other hand, the second material (material chips B) having been negatively charged in the first stage tends to remain negatively charged.

The electric-field-introducing device 3b in the second stage is supplied with the charged second sorted matter from the frictional charging device 2b. At least a contact surface with the second sorted matter of the electric-field-introducing device 3b is again made of the second material (same material property as the material chip B). The electric-field-introducing device 3b has the function of sending the second sorted matter toward the opposed electrodes 41b and 42b.

The opposed electrode (positive electrode) 41b in the second stage is applied with a high potential by the power source 51b in the second stage, and the opposed electrode (negative electrode) 42b in the second stage is applied with a low potential by the power source 52b in the second stage. An electric field is thus generated across the opposed electrodes 41b and 42b. The charged second sorted matter passes through this electric field. The positively charged first material (material chips A) in the charged second sorted matter is attracted to the opposed electrode 42b on the low-potential side, while the negatively charged second material (material chips B) in the charged second sorted matter is attracted to the opposed electrode 41b on the high-potential side.

Consequently, a third sorted matter including the first material (material chips A) and the second material (material chips B), and a fourth sorted matter of higher content by percentage of the second material (material chips B) than the content by percentage of the second material (material chips B) in the second sorted matter are sorted from the second sorted matter. That is, the second material (material chips B) is purified to a higher degree in the fourth sorted matter than in the second sorted matter. The opposed electrodes 41b and 42b and the power sources 51b and 52b form a second electrostatic sorting device. The third sorted matter is recovered by a part 7b of the recovery box 8b, and the fourth sorted matter by a part 6b of the recovery box 8b.

The sufficiently charged material chips A are attracted to the negative electrode 42b side upon passing through the electric field generated across the opposed electrodes 41b and 42b, to be sorted as the third sorted matter. That is, upon feeding the second sorted matter (of higher content by percentage of the material chips B than the content by percentage of the material chips A) having been sorted by the first electrostatic sorting device in the first stage into the frictional charging device 2b in the second stage by the material-supplying device 1b in the second stage, the material chips A present in the second sorted matter become positively charged efficiently by being rubbed against the material chips B and the inner wall of the frictional charging device 2b that is made of the material property B. The result is that the material chips A are attracted to the negative electrode 42 side upon passing through the electric field, to be removed from the material chips B by a larger amount.

As has been described, in the charging and sorting device according to the first preferred embodiment, the first and second sorted matters are sorted from the mixture by the first electrostatic sorting device, which is formed by the opposed electrodes 41a and 42a and the power sources 51a and 52a, and then the third and fourth sorted matters are sorted from the second sorted matter by the second electrostatic sorting device, which is formed by the opposed electrodes 41b and 42b and the power sources 51b and 52b. By subjecting the mixture including the first and second materials (material chips A and B) to two-stage sorting, and selecting the materials of the portions having charging capability of the first and second charging devices to conform to the electrostatic properties of the materials of the mixture, the charging of the first and second materials in the first and second charging devices is accelerated, making it easy to obtain sorted matters where the first and second materials have been purified to a high degree. A charging and sorting device is therefore achieved which is capable of sorting the materials of the mixture to a higher degree.

Although a friction method in a rotational cylindrical form has been illustrated with the frictional charging devices 2a and 2b in Figs. 1 and 2, a cyclone method to use cyclones for the frictional charging devices 2a and 2b to apply friction, or a vibration method to give vibrations to the frictional charging devices to apply friction may alternatively employed.

Moreover, while the opposed electrodes 41a and 42a in the first stage and the opposed electrodes 41b and 42b in the second stage have been illustrated as platelike electrodes, a cylindrical drum-type electrode or other electrodes may alternatively be used for one or both of the opposed electrodes in the first and second stages.

### Second Preferred Embodiment

In a second preferred embodiment, the charging and sorting device according to the first preferred embodiment is modified by additionally providing a dry-air-introducing device for introducing dry air as dry gas into at least one of the frictional charging devices 2a and 2b of the first preferred embodiment. The frictional charging devices are labeled with reference numerals 21a and 21b instead of 2a and 2b, respectively, in the second preferred embodiment.

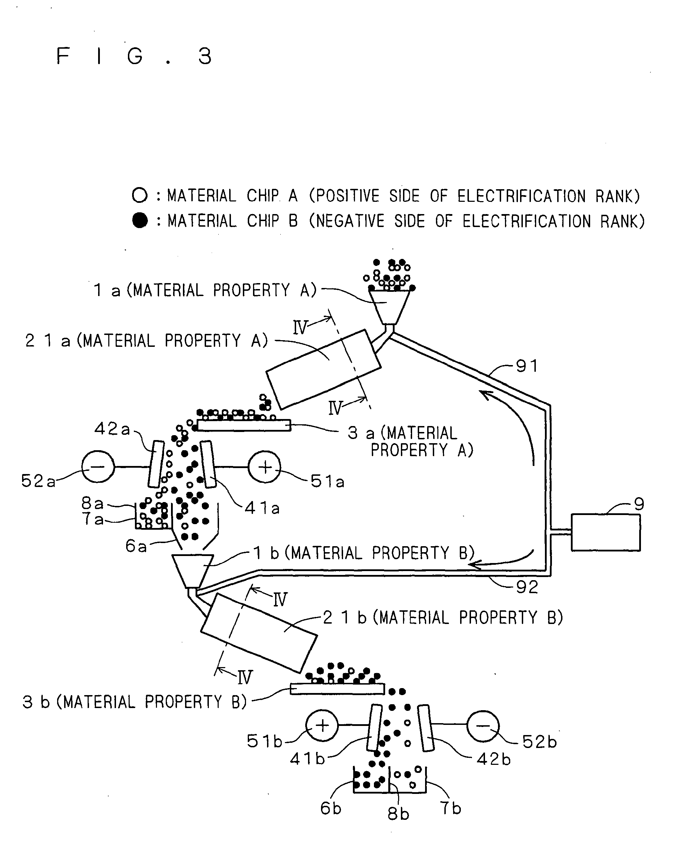

Fig. 3 illustrates the charging and sorting device according to the second preferred embodiment. As shown, a dry-air-introducing device 9 capable of introducing dry air, and its introduction paths 91 and 92 are provided in space for performing frictional charging within the frictional charging devices 21a and 21b in the first and second stages.

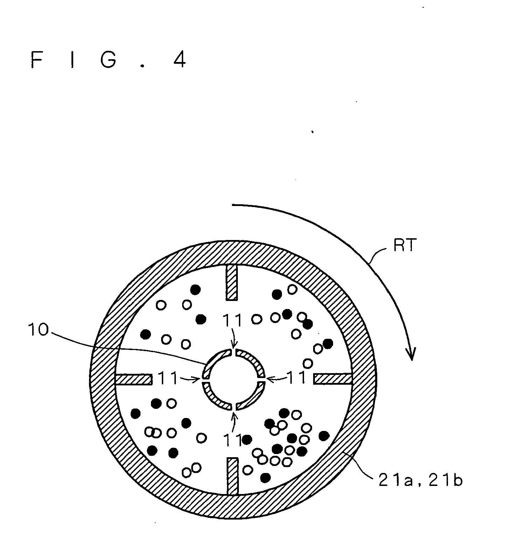

The frictional charging devices 21a and 21b are rotatable cylindrical stirring vessels. Fig. 4 illustrates a cross-sectional structure of the frictional charging devices 21a and 21b, taken along the section lines IV-IV in Fig. 3, respectively. As shown in Fig. 4, the frictional charging devices 21a and 21b are rotatable in a direction RT of rotation of the axis of the stirring vessel, and rub the mixture including the material chips A and B while stirring the mixture by rotation, to thereby charge the mixture. Further, a dry-air-introducing tube 10 continuous with the introduction paths 91 and 92 for dry air from the dry-air-introducing device 9 is provided in a central axis portion of the frictional charging devices 21a and 21b. The dry-air-introducing tube 10 is provided with minute holes 11. The minute holes 11 have a diameter sufficiently smaller than the material chips A and B.

The dry-air-introducing device 9 introduces dry air of constant temperature and humidity, with its temperature being adjusted to from 40°C to 70°C and humidity not more than 40%, into the dry-air-introducing tube 10 via the introduction paths 91 and 92. The dry air is then introduced via the minute holes 11 into the frictional charging devices 21a and 21b, to fill the insides of the frictional charging devices 21a and 21b.

The charging and sorting device according to the second preferred embodiment is structurally identical to the charging and sorting device according to the first preferred embodiment, except that the frictional charging devices 21a and 21b replace the frictional charging devices 2a and 2b, and that the dry-air-introducing device 9 and its introduction paths 91 and 92 are additionally provided. Descriptions of the other elements are therefore omitted.

The charging and sorting device according to the second preferred embodiment further includes the introducing device for introducing dry gas into at least one of the frictional charging devices 21a and 21b. The introduction of dry gas into the first and second electrostatic sorting devices improves charging efficiency of the mixture and the second sorted matter, and maintains the accuracy of electrostatic sorting with stability without being affected by seasons or weather.

### Third Preferred Embodiment

In a third preferred embodiment, the charging and sorting device according to the first preferred embodiment is modified such that at least one of the first sorted matter recovered by the part 7a of the recovery box 8a and the third sorted matter recovered by the part 7b of the recovery box 8b in the first preferred embodiment is returned to the first charging device, and at least one of the first and third sorted matters is charged by the first charging device, sorted by the first electrostatic sorting device, charged by the second charging device, and sorted by the second electrostatic sorting device.

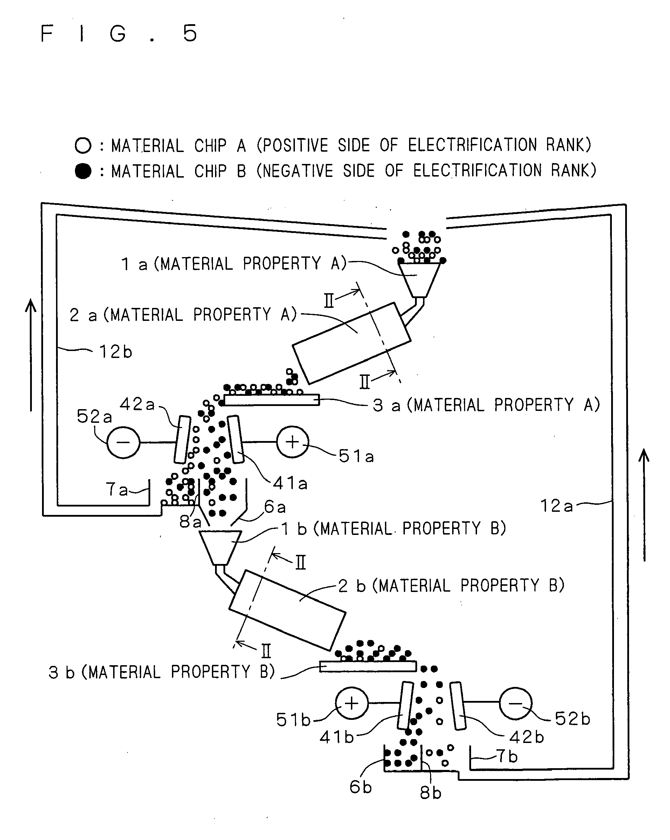

Fig. 5 illustrates the charging and sorting device according to the third preferred embodiment. This charging and sorting device is structurally identical to the charging and sorting device according to the first preferred embodiment, except that a transport pipe 12a for transporting the third sorted matter recovered by the part 7b of the recovery box 8b to the material-supplying device 1a in the first stage, and a transport pipe 12b for transporting the first sorted matter recovered by the part 7a of the recovery box 8a to the material-supplying device 1a in the first stage are provided. Descriptions of the other elements are therefore omitted.

The first and third sorted matters transported to the material-supplying device 1a by the transport pipes 12a and 12b are returned to the frictional charging device 2a in the first stage as the first charging device, to be charged again. The charged first and third sorted matters are then sorted by the opposed electrodes 41a and 42a in the first stage forming the first electrostatic sorting device, charged by the frictional charging device 2b in the second stage as the second charging device, and sorted by the opposed electrodes 41b and 42b in the second stage forming the second electrostatic sorting device.

In the charging and sorting device according to the third preferred embodiment, at least one of the first and third sorted matters is returned to the first charging device, to be charged by the first charging device, sorted by the first electrostatic sorting device, charged by the second charging device, and sorted by the second electrostatic sorting device. The first and third sorted matters are therefore subjected to further sorting, thus achieving a charging and sorting device capable of sorting the materials of the mixture to a higher degree.

### Fourth Preferred Embodiment

In a fourth preferred embodiment, the charging and sorting device according to the first preferred embodiment is modified by additionally providing a third charging device, a third electrostatic sorting device, a fourth charging device, and a fourth electrostatic sorting device.

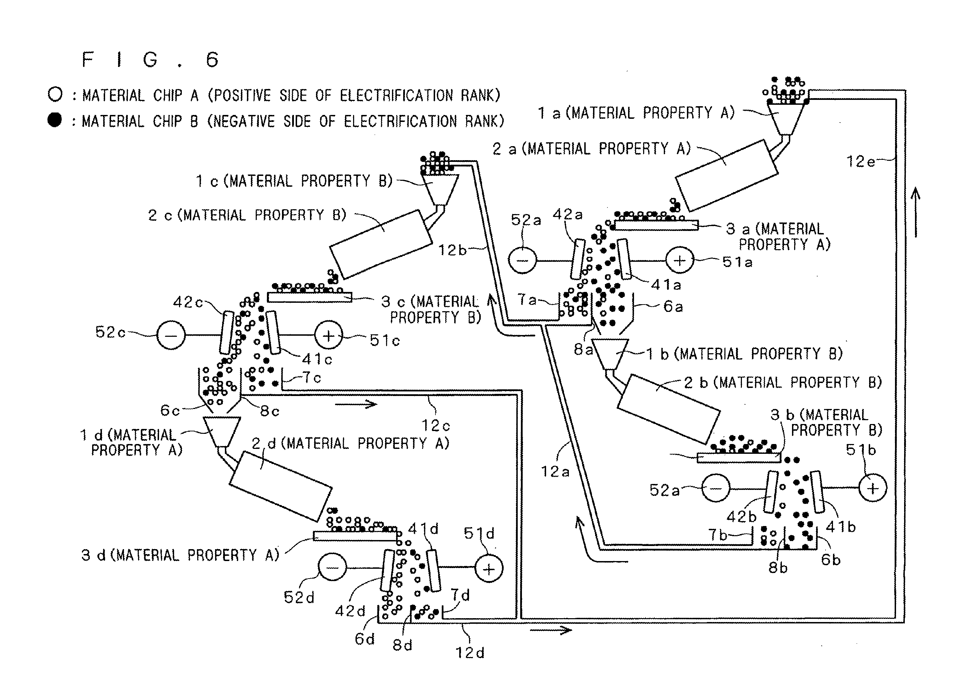

Fig. 6 illustrates the charging and sorting device according to the fourth preferred embodiment. As shown, this charging and sorting device includes the material-supplying device 1a in the first stage, the frictional charging device 2a in the first stage, the electric-field-introducing device 3a in the first stage, the opposed electrodes 41a and 42a as platelike electrodes in the first stage, the power sources 51a and 52a in the first stage, the recovery box 8a in the first stage, the material-supplying device 1b in the second stage, the frictional charging device 2b in the second stage, the electric-field-introducing device 3b in the second stage, the opposed electrodes 41b and 42a as platelike electrodes in the second stage, the power sources 51b and 52b in the second stage, and the recovery box 8b in the second stage, which are shown in Fig. 1. In addition, this charging and sorting device includes a material-supplying device 1c in a third stage, a frictional charging device 2c in the third stage, an electric-field-introducing device 3c in the third stage, opposed electrodes 41c and 42c as platelike electrodes in the third stage, power sources 51c and 52c in the third stage, a recovery box 8c in the third stage, a material-supplying device 1d in a fourth stage, a frictional charging device 2d in the fourth stage, an electric-field-introducing device 3d in the fourth stage, opposed electrodes 41d and 42d as platelike electrodes in the fourth stage, power sources 51d and 52d in the fourth stage, and a recovery box 8d in the fourth stage.

Further provided are a transport pipe 12a for transporting the third sorted matter recovered by the part 7b of the recovery box 8b to the material-supplying device 1c in the third stage, and a transport pipe 12b for transporting the first sorted matter recovered by the part 7a of the recovery box 8a to the material-supplying device 1c in the third stage.

The mixture including the first material (material chips A) and the second material (material chips B) is charged by the frictional charging device 2a in the first stage as the first charging device, sorted by the opposed electrodes 41a and 42a in the first stage forming the first electrostatic sorting device, charged by the frictional charging device 2b in the second stage as the second charging device, and sorted by the opposed electrodes 41b and 42b in the second stage forming the second electrostatic sorting device, in the same fashion as the first preferred embodiment. Descriptions of these steps are therefore omitted.

The first and third sorted matters transported to the material-supplying device 1c by the transport pipes 12a and 12b are supplied to the frictional charging device 2c in the third stage by the material-supplying device 1c. At least a contact surface with the first and third sorted matters of the material-supplying device 1c is made of the second material (material chips B).

At least a portion having charging capability (contact surface with the first and third sorted matters, namely, the inner wall) of the frictional charging device 2c in the third stage is made of the second material (same material property as the material chip B). The frictional charging device 2c serves as a third charging device for charging at least one of the first and third sorted matters. The frictional charging device 2c is a rotatable cylindrical stirring vessel, like the frictional charging devices 2a and 2b.

In the frictional charging device 2c in the third stage, where at least the portion having charging capability is made of the second material (same material property as the material chip B), the first material (material chips A) in the first and third sorted matters tends to become positively charged and the second material (material chips B) in the first and third sorted matters tends to become negatively charged. The material chips A become charged by being rubbed not only against the material chips B, but against the inner wall of the frictional charging device 2c as well. Thus, the material chips A tend to become further positively charged.

The electric-field-introducing device 3c in the third stage is supplied with the charged first and third sorted matters from the frictional charging device 2c. At least a contact surface with the first and third sorted matters of the electric-field-introducing device 3c is again made of the second material (same material property as the material chip B). The electric-field-introducing device 3c has the function of sending the first and third sorted matters toward the opposed electrodes 41c and 42c.

The opposed electrode (positive electrode) 41c in the third stage is applied with a high potential by the power source 51c in the third stage, and the opposed electrode (negative electrode) 42c in the third stage is applied with a low potential by the power source 52c in the third stage. An electric field is thus generated across the opposed electrodes 41c and 42c. The charged first and third sorted matters pass through this electric field. The positively charged first material (material chips A) in the charged first and third sorted matters is attracted to the opposed electrode 42c on the low-potential side, while the negatively charged second material (material chips B) in the charged first and third sorted matters is attracted to the opposed electrode 41c on the high-potential side.

Consequently, a fifth sorted matter of higher content by percentage of the first material (material chips A) than the content by percentage of the first material (material chips A) in the mixture of the first and third sorted matters, and a sixth sorted matter of higher content by percentage of the second material (material chips B) than the content by percentage of the second material (material chips B) in the mixture of the first and third sorted matters are sorted from the mixture of the first and third sorted matters. That is, the first material (material chips A) is purified to a high degree in the fifth sorted matter, and the second material (material chips B) is purified to a high degree in the sixth sorted matter. The opposed electrodes 41c and 42c and the power sources 51c and 52c form a third electrostatic sorting device. The fifth sorted matter is recovered by a part 6c of the recovery box 8c, and the sixth sorted matter by a part 7c of the recovery box 8c.

The fifth sorted matter of higher content by percentage of the first material (material chips A) than the content by percentage of the second material (material chips B) is fed into the material-supplying device 1d in the fourth stage from the part 6c of the recovery box 8c. At least a contact surface with the fifth sorted matter of the material-supplying device 1d is made of the first material (material chips A).

The frictional charging device 2d in the fourth stage is supplied with the fifth sorted matter from the material-supplying device 1d. At least a portion having charging capability (contact surface with the fifth sorted matter, namely, the inner wall) of the frictional charging device 2d is made of the first material (same material property as the material chip A). The frictional charging device 2d serves as a fourth charging device for charging the fifth sorted matter.

The frictional charging device 2d is a rotatable cylindrical stirring vessel, like the frictional charging devices 2a to 2c. In the frictional charging device 2d in the fourth stage, where at least the portion having charging capability is made of the first material (same material property as the material chip A), the second material (material chips B) having been negatively charged in the third stage in the fifth sorted matter tends to become further negatively charged. On the other hand, the first material (material chips A) having been positively charged in the third stage tends to remain positively charged.

The electric-field-introducing device 3d in the fourth stage is supplied with the charged fifth sorted matter from the frictional charging device 2d. At least a contact surface with the fifth sorted matter of the electric-field-introducing device 3d is again made of the first material (same material property as the material chip A). The electric-field-introducing device 3d has the function of sending the fifth sorted matter toward the opposed electrodes 41d and 42d.

The opposed electrode (positive electrode) 41d in the fourth stage is applied with a high potential by the power source 51d in the fourth stage, and the opposed electrode (negative electrode) 42d in the fourth stage is applied with a low potential by the power source 52d in the fourth stage. An electric field is thus generated across the opposed electrodes 41d and 42d. The charged fifth sorted matter passes through this electric field. The positively charged first material (material chips A) in the charged fifth sorted matter is attracted to the opposed electrode 42d on the low-potential side, while the negatively charged second material (material chips B) in the charged fifth sorted matter is attracted to the opposed electrode 41d on the high-potential side.

Consequently, a seventh sorted matter of higher content by percentage of the first material (material chips A) than the content by percentage of the first material (material chips A) in the fifth sorted matter, and an eighth sorted matter including the first and second materials are sorted from the fifth sorted matter. That is, the opposed electrodes 41d and 42d and the power sources 51d and 52d form a fourth electrostatic sorting device. The seventh sorted matter is recovered by a part 6d of the recovery box 8d, and the eighth sorted matter by a part 7d of the recovery box 8d.

As has been described, in the charging and sorting device according to the fourth preferred embodiment, the fifth and sixth sorted matters are sorted from at least one of the first and third sorted matters by the third electrostatic sorting device, which is formed by the opposed electrodes 41c and 42c and the power sources 51c and 52c, and then the seventh and eighth sorted matters are sorted from the fifth sorted matter by the fourth electrostatic sorting device, which is formed by the opposed electrodes 41d and 42d and the power sources 51d and 52d. By subjecting at least one of the first and third sorted matters including the first and second materials to further two-stage sorting, and selecting the materials of the portions having charging capability of the third and fourth charging devices to conform to the electrostatic properties of the materials of the mixture, the charging of the first and second materials in the third and fourth charging devices is accelerated, making it easy to obtain sorted matters where the first and second materials have been purified to a high degree. A charging and sorting device is therefore achieved which is capable of sorting the materials of the mixture to a higher degree.

Further provided are transport pipes 12d and 12e for transporting the eighth sorted matter recovered by the part 7d of the recovery box 8d to the material-supplying device 1a in the first stage, and transport pipes 12c and 12e for transporting the sixth sorted matter recovered by the part 7c of the recovery box 8c to the material-supplying device 1a in the first stage.

The sixth and eighth sorted matters transported to the material-supplying device 1a by the transport pipes 12c to 12e are returned to the frictional charging device 2a in the first stage as the first charging device, to be charged again. The charged sixth and eighth sorted matters are then sorted by the opposed electrodes 41a and 42a in the first stage forming the first electrostatic sorting device, charged by the frictional charging device 2b in the second stage as the second charging device, and sorted by the opposed electrodes 41b and 42b in the second stage forming the second electrostatic sorting device.

In the charging and sorting device according to the fourth preferred embodiment, at least one of the sixth and eighth sorted matters is returned to the first charging device, to be charged by the first charging device, sorted by the first electrostatic sorting device, charged by the second charging device, and sorted by the second electrostatic sorting device. The sixth and eighth sorted matters are therefore subjected to further sorting, thus achieving a charging and sorting device capable of sorting the materials of the mixture to a higher degree.

While the invention has been shown and described in detail, the foregoing description is in all aspects illustrative and not restrictive. It is therefore understood that numerous modifications and variations can be devised without departing from the scope of the invention.

## Claims

1. A charging and sorting device for sorting a first material (material chips A) and a second material (material chips B) placed in different positions in a frictional electrification rank from a mixture including the first and second materials, the charging and sorting device comprising:
- a first charging device (2a, 3a) for charging the mixture, at least a portion having charging capability of the first charging device being made of the first material (material chips A);
- a first electrostatic sorting device (41a, 42a, 51a, 52a) having a first electrode (41a) and a second electrode (42a), the first electrostatic sorting device generating a first electric field across the first and second electrodes (41a, 42a) to make the mixture having been charged pass through the first electric field, thereby sorting a first sorted matter (7a) and a second sorted matter (6a) from the mixture, the first sorted matter (7a) being of higher content by percentage of the first material than the content by percentage of the first material in the mixture, and the second sorted matter (6a) being of higher content by percentage of the second material than the content by percentage of the second material in the mixture;
- a second charging device (2b, 3b) for charging the second sorted matter (6a), at least a portion having charging capability of the second charging device (2b, 3b) being made of the second material (material chips B); and
- a second electrostatic sorting device (41b, 42b, 51b, 52b) having a third electrode (41b) and a fourth electrode (42b), the second electrostatic sorting device generating a second electric field across the third and fourth electrodes (41b, 42b) to make the second sorted matter (6a) having been charged pass through the second electric field, thereby sorting a third sorted matter (7b) and a fourth sorted matter (6b) from the second sorted matter (6a), the third sorted matter (7b) including the first and second materials, and the fourth sorted matter (6b) being of higher content by percentage of the second material than the content by percentage of the second material in the second sorted matter (6a).

2. The charging and sorting device according to claim 1, further comprising:
an introducing device (9) for introducing dry gas into at least one of the first and second charging devices (2a, 3a; 2b, 3b).

3. The charging and sorting device according to claim 1 or 2,
wherein at least one of the first and third sorted matters (7a, 7b) is returned to the first charging device (2a, 3a), to be charged by the first charging device (2a, 3a), sorted by the first electrostatic sorting device (41a, 42a, 51a, 52a), charged by the second charging device (2b, 3b), and sorted by the second electrostatic sorting device (41b, 42b, 51b, 52b).

4. The charging and sorting device according to any of claims 1 to 3, further comprising:
- a third charging device (2c, 3c) for charging at least one of the first and third sorted matters (7a, 7b), at least a portion having charging capability of the third charging device (2c, 3c) being made of the second material (material chips B);
- a third electrostatic sorting device (41c, 42c, 51c, 52c) having a fifth electrode (41c) and a sixth electrode (42c), the third electrostatic sorting device generating a third electric field across the fifth and sixth electrodes (41c, 42c) to make at least one of the first and third sorted matters (7a, 7b) having been charged pass through the third electric field, thereby sorting a fifth sorted matter (6c) and a sixth sorted matter (7c) from at least one of the first and third sorted matters (7a, 7b), the fifth sorted matter (6c) being of higher content by percentage of the first material than the content by percentage of the first material in one of the first and third sorted matters (7a, 7b) or in a mixture of the first and third sorted matters (7a, 7b), and the sixth sorted matter (7c) being of higher content by percentage of the second material than the content by percentage of the second material in one of the first and third sorted matters (7a, 7b) or in a mixture of the first and third sorted matters (7a, 7b);
- a fourth charging device (2d, 3d) for charging the fifth sorted matter (6c), at least a portion having charging capability of the fourth charging device being made of the first material (material chips A); and
- a fourth electrostatic sorting device (41d, 42d, 51d, 52d) having a seventh electrode (41d) and an eighth electrode (42d), the fourth electrostatic sorting device generating a fourth electric field across the seventh and eighth electrodes (41d, 42d) to make the fifth sorted matter (6c) having been charged pass through the fourth electric field, thereby sorting a seventh sorted matter (6d) and an eighth sorted matter (7d) from the fifth sorted matter (6c), the seventh sorted matter (7d) being of higher content by percentage of the first material than the content by percentage of the first material in the fifth sorted matter (6c), and the eighth sorted matter (7d) including the first and second materials.

5. The charging and sorting device according to claim 4,
wherein at least one of the sixth and eighth sorted matters (7c, 7d) is returned to the first charging device (2a, 3a), to be charged by the first charging device (2a, 3a), sorted by the first electrostatic sorting device (41a, 42a, 51a, 52a), charged by the second charging device (2b, 3b), and sorted by the second electrostatic sorting device (41b, 42b, 51b, 52b).

6. A charging and sorting method,
comprising the following steps:
(a) frictionally charging a mixture mainly including a first material (material chips A) and a second material (material chips B) placed in different positions in a frictional electrification rank by a first frictional charging section (2a, 3a) made of the same material property as the first material (material chips A);
(b) making the mixture having been frictionally charged pass through a first electric field, thereby sorting a first sorted matter (7a) and a second sorted matter (6a) from the mixture, the first sorted matter (7a) being of higher content by percentage of the first material than the content by percentage of the first material in the mixture, and the second sorted matter (6a) being of higher content by percentage of the second material than the content by percentage of the second material in the mixture;
(c) frictionally charging the second sorted matter by a second frictional charging section (2b, 3b) made of the same material property as the second material (material chips B); and
(d) making the second sorted matter (6a) having been frictionally charged pass through a second electric field, thereby sorting a third sorted matter (7b) and a fourth sorted matter (6b) from the second sorted matter (6a), the third sorted matter (7b) including the first and second materials, and the fourth sorted matter (6b) being of higher content by percentage of the second material than the content by percentage of the second material in the second sorted matter (6a).

7. The charging and sorting method according to claim 6,
wherein the frictional charging is performed in an atmosphere of dry gas in at least one of the steps (a) and (c).

8. The charging and sorting method according to claim 6or 7,
wherein at least one of the first and third sorted matters (7a, 7b) is returned to the step (a), to be subjected to the steps (a) to (d).

9. The charging and sorting method according to any of claims 6 to 8,
further comprising the following steps:
(e) frictionally charging at least one of the first and third sorted matters (7a, 7b) by a third frictional charging section (2c, 3c) made of the same material property as the second material (material chips B);
(f) making at least one of the first and third sorted matters (7a, 7b) having been frictionally charged pass through a third electric field, thereby sorting a fifth sorted matter (6c) and a sixth sorted matter (7c) from at least one of the first and third sorted matters (7a, 7b), the fifth sorted matter (6c) being of higher content by percentage of the first material than the content by percentage of the first material in one of the first and third sorted matters (7a, 7b) or in a mixture of the first and third sorted matters (7a, 7b), and the sixth sorted matter (7c) being of higher content by percentage of the second material than the content by percentage of the second material in one of the first and third sorted matters (7a, 7b) or in a mixture of the first and third sorted matters (7a, 7b);
(g) frictionally charging the fifth sorted matter (6c) by a fourth frictional charging section (2d, 3d) made of the same material property as the first material (material chips A); and
(h) making the fifth sorted matter (6c) having been frictionally charged pass through a fourth electric field, thereby sorting a seventh sorted matter (6d) and an eighth sorted matter (7d) from the fifth sorted matter, the seventh sorted matter (6d) being of higher content by percentage of the first material than the content by percentage of the first material in the fifth sorted matter (6c), and the eighth sorted matter (7d) including the first and second materials.

10. The charging and sorting method according to claim 9,
wherein at least one of the sixth and eighth sorted matters (6d, 7d) is returned to the step (a), to be subjected to the steps (a) to (d).
